# EUROPEAN PATENT SPECIFICATION

(11) **EP 1 393 615 B1**
(45) Date of publication and mention of the grant of the patent: **04.05.2005**
(21) Application number: 01934486.0
(22) Date of filing: 01.06.2001
(51) Int. Cl.: A01G 7/06

(54) **METHOD OF INCREASING THE YIELD OF PEAS REGARDLESS OF THE WEATHER**
VERFAHREN ZUR ERHÖHUNG DER AUSBEUTE AN ERBSEN UNABHÄNGIG VOM WETTER
PROCEDE PERMETTANT D'AUGMENTER LE RENDEMENT DES POIS INDEPENDAMMENT DU TEMPS

(43) Date of publication of application: 03.03.2004
(73) Proprietor: Hirose, Isamu, Hurano-shi, Hokkaido 076-0051 (JP)
(72) Inventor: Hirose, Isamu, Hurano-shi, Hokkaido 076-0051 (JP)
(74) Representative: Hofer, Dorothea, Dipl.-Phys.
(86) International application number: PCT/JP2001/004641
(87) International publication number: WO 2002/098205

(56) References cited:
- JP-A- 6 141 711
- JP-A- 7 010 718
- JP-A- 8 056 491
- JP-A- 9 000 068
- JP-A- 61 009 228
- SU-A- 1 639 468
- US-A- 4 069 614

## Description

### TECHNICAL FIELD

The present invention relates to a method for increasing the yield of leguminous products (adzuki bean, soybean, pea, and the like) in a manner unaffected by weather.

### BACKGROUND ART

Document SU-A-1 639 468 discloses a method for increasing the yield in pea cultivation.

In conventional cultivation of leguminous plants, seeds are sown at a ridge width of 60 cm to 66 cm and a hill interval of 19 cm to 24 cm, and fertilizer is applied as appropriate. Usually, until harvesting is performed, management, control, weeding, top dressing, and like tasks are carried out as needed by use of a cultivator. Also, a dense planting cultivation technique and the like are well established. However, such methods have failed to increase yields.

According to these cultivation methods, after germination, branches and leaves of leguminous plants are left as they grow before harvest. Thus, in such cultivation methods, leguminous plants are covered thickly with leaves in such a manner that the leaves densely surround the stalk and the upper portion thereof. Even though pods containing seeds must be intensively fed with nutrients, nutrients are absorbed in a large amount by portions other than the pods containing seeds, such as lateral branches and leaves on the branches. As a result, not only does the yield of leguminous products drop, but also growth of the leguminous plants consumes excessive time.

Generally, leguminous pods sequentially ripen from the bottom branch up to fifth to eighth branch or thereabouts. However, during the harvesting season, pods on upper branches are not ripened and thus tend to bear unripe seeds. Therefore, yield drops accordingly. However, if elimination of lateral branches and leaves on the branches is carried out too early or too late, it becomes unlikely to yield its effect.

An object of the present invention is to provide according to the claim a method for increasing the yield of leguminous products in a manner unaffected by weather. According to the method, up to a certain stage of cultivation, a leguminous plant is allowed to grow as is. When podding begins, lateral branches and leaves on the branches, which absorb large amounts of nutrients, are eliminated so that nutrients can be utilized exclusively for growing pods containing seeds. Thus, the method accelerates ripening of pods and ripens seeds borne in pods growing on up to upper branches.

### DISCLOSURE OF THE INVENTION

The present invention allows intensive utilization of nutrients for ripening pods containing seeds by a method in which, after germination of sown seeds of a leguminous plant and subsequent growth of seedlings, when podding begins on the lowermost branch, branches extending outward as viewed from the pods are cut off together with leaves on the branches.

According to the present invention, during a growing period of a leguminous plant, the plant is allowed to be sufficiently irradiated with sunlight, so that the plant grows and prepares for podding. When podding begins on a bottom branch, lateral branches and leaves on the branches are cut off so as to prevent feeding of nutrients to the branches and leaves, thereby allowing intensive growth of pods containing seeds. This:
1) leads to an increase in the yield of pods containing seeds without being affected by weather;
2) allows a leguminous plant to be unsusceptible to frost damage by means of accelerated growth; and
3) strengthens the stalk (stem) through cutting off lateral branches and leaves on the branches (prevents fall of the stalk which could otherwise result from overgrown leaves and stalk under certain weather conditions such as heavy precipitation), thereby allowing cultivation of a leguminous product resistant to drought or the like. As compared with conventional practice, the present invention can advance the harvest time about 2 weeks and can drastically increase yield.

### BRIEF DESCRIPTION OF DRAWINGS

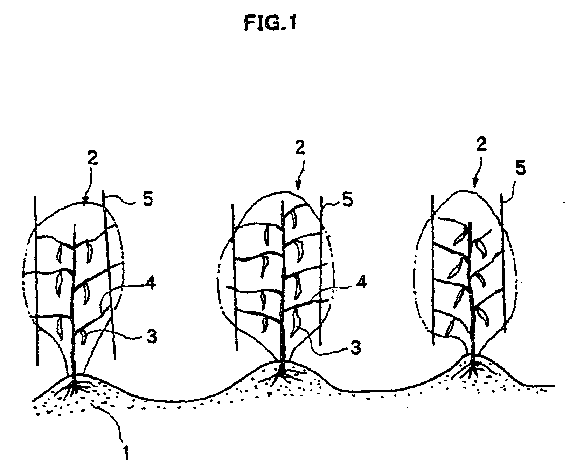

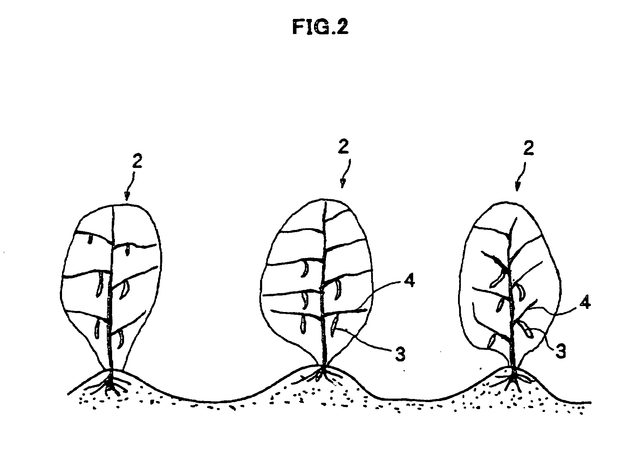

FIG. 1 is a view showing a method of the present invention in which lateral branches are cut off together with leaves on the branches; and FIG. 2 is a view showing a conventional method.

### BEST MODE FOR CARRYING OUT THE INVENTION

The present inventors have experimentally solved a problem involved in a conventional cultivation method as follows: distribution of nutrients to a portion of a leguminous product; for example, lateral branches and leaves on the branches, hinders growth of pods and an increase in the yield of leguminous products, and such a portion is eliminated at a certain stage of cultivation. The present invention has been accomplished in accordance with the experimental results.

The optimal stage for eliminating lateral branches together with leaves on the branches is when podding begins on the lowermost branch. According to the findings of the present inventors, the elimination allows utilization of nutrients for growing pods containing seeds, thereby accelerating ripening and increasing yield.

According to the findings of the present inventors, elimination of lateral branches and leaves on the branches prevents fall of a plant body and damping-off caused by drought, and efficient use of nitrogen fertilizer leads to an increase in the yield of pods containing seeds.

According to the findings of the present inventors, also in dense planting cultivation, cutting off of lateral branches and leaves on the branches proves itself very effective at the time of harvest.

Referring to FIG. 1, reference numeral 2 denotes a leguminous plant growing on soil 1. Reference numeral 3 denotes pods containing seeds, which grow near proximal portions of lateral branches 4. Distal portions of the lateral branches 4 are covered thickly with leaves, but do not bear pods.

Thus, at an appropriate time when podding begins on the lowermost branch, portions of the plant extending outward from the position marked with reference numeral 5; i.e., portions of the plant extending outward as viewed from pods, are cut off.

As mentioned above, when lateral branches, together with leaves thereon, extending outward as viewed from pods are cut off at an appropriate time when podding begins on the lowermost branch, nutrients absorbed from the soil are primarily utilized for growing pods containing seeds, whereby growth of pods containing seeds is accelerated, thereby leading to an increase in yield.

According to conventional practice, in a cold region, as in Hokkaido, where frost comes in an early season, harvesting is carried out before the frosting season comes, regardless of whether or not pods containing seeds are ripe.

By contrast, the present invention allows intensive growth of pods containing seeds and thus accelerates growth of the pods containing seeds. Thus, before the frosting season comes, harvesting can be carried out such that even pods containing seeds on upper branches are ripe.

The conventional method provides an yield of, for example, about 260 kg per 10 ares. By contrast, the method of the present invention provides an yield of about 330 kg to as high as 360 kg per 10 ares (30% to 40% increase), thus proving its excellent effect.

## Claims

1. A method for increasing the yield of leguminous products in a manner unaffected by weather, **characterized in that**, after germination of sown seeds of a leguminous plant (2) and subsequent growth of seedlings, when podding begins on the lowermost branch, branches extending outward (5) as viewed from the pods (3) are cut off together with leaves on the branches so as to intensively utilize nutrients for ripening pods (3) containing seeds.

## Patentansprüche

1. Verfahren zur Erhöhung der Ausbeute von Hülsenfruchtprodukten auf eine vom Wetter unbeeinträchtigten Weise, **dadurch gekennzeichnet, daß** nach der Keimung von gesätem Saatgut einer Hülsenfruchtpflanze (2) und dem anschließenden Wachstum der Setzlinge, wenn die Schotenbildung am untersten Zweig beginnt, Zweige, die sich von Schoten (3) aus gesehen nach außen (5) erstrecken, zusammen mit Blättern auf den Zweigen abgeschnitten werden, um Nährstoffe zum Reifen von Saat-haltigen Schoten (3) intensiv zu nutzen.

## Revendications

1. Procédé destiné à augmenter le rendement de légumineuses d'une manière non affectée par le temps, **caractérisé en ce que**, après la germination des graines semées d'une plante légumineuse (2) et la pousse successive de semis, lorsque le développement des cosses commence sur la branche la plus basse, des branches s'étendant vers l'extérieur (5) observées à partir des cosses (3) sont coupées en même temps que les feuilles sur les branches de façon à utiliser de manière intensive des substances nutritives pour faire mûrir des cosses (3) contenant des graines.
